# EUROPEAN PATENT SPECIFICATION

(11) **EP 1 830 973 B1**
(45) Date of publication and mention of the grant of the patent: **23.02.2011**
(21) Application number: 05819325.1
(22) Date of filing: 15.12.2005
(51) Int. Cl.: B09C 1/10

(54) **ADDITIVE, ITS USE AND METHOD FOR DECONTAMINATING POLLUTED SOIL**
SUBSTANZ ZUR DEKONTAMINIERUNG VON VERUNREINIGTEM BODEN EINSCHLIESSLICH VERWENDUNG UND VERFAHREN
ADDITIF, SON UTILISATION ET PROCEDE DE DECONTAMINATION D'UN SOL POLLUE

(30) Priority: 20.12.2004 IT MI20042432
(43) Date of publication of application: 12.09.2007
(73) Proprietor: Eurovix S.R.L., 25046 Cazzago San Martino (IT)
(72) Inventor: BONASSI, Dario, I-25046 Cazzago San Martino (IT); MAGGIONI, Paolo, I-24058 Romano di Lombardia (IT); BRIGNOLI, PierLorenzo, I-20052 Monza (IT)
(74) Representative: Modiano, Micaela Nadia
(86) International application number: PCT/EP2005/056838
(87) International publication number: WO 2006/067085

(56) References cited:
- FR-A- 2 781 702
- US-A- 5 525 139

## Description

### Technical Field

The present invention relates to a method for decontaminating land from pollution caused by POP (Persistant organic pollutants), particularly PCB and APH.

### Background Art

The acronym POP conventionally designates a group of organic pollutants characterized by marked persistence in the environment and by the tendency to bioaccumulate in animal and plant tissues due to their markedly lipophilic nature. Among the best-known POPs, mention can be made of PCBs (polychlorobiphenyls), APHs (aromatic polycyclic hydrocarbons), dioxins and other chlororganic substances.

PCBs are organic compounds which are not present naturally and are derived from biphenyl by substituting hydrogen atoms with chlorine atoms. The acronym PCB is also used to indicate compounds, such as polychlorotriphenyls, which have uses similar to biphenyls since they have similar chemical, physical and toxicological characteristics. The water solubility of PCBs is very low; their solubility in oils and organic solvents is distinctly higher. The number and position of the chlorine atoms on the central core allow formal classification of these compounds into 10 classes of homologues and to determine their degree of toxicity. PCBs enter the environment generally by means of the illegal disposal of contaminated industrial waste, from which, initially by evaporation and then by dry or wet deposition, they rapidly accumulate in plants, water and especially soil.

APHs are natural and synthetic organic molecules, produced by petroleum-related activities and natural and human processes of pyrolysis of organic material. These compounds are chemically highly hydrophobic and accumulate in soil and sediments by association with their organic fraction. Their limited solubility and low rate of desorption in water, which decreases as the number of rings increases, are the main cause of the persistence of these substances in soil and sediments.

Conventionally, the POP biodegradation capacity exhibited by microorganisms present mainly in soil is utilized. For example, PCBs can be degraded both by bacteria of the genera *Acinobacter*, *Alcaligenes* (Bedard et al, Rapid assay for screening and characterizing microorganisms for the ability to degrade polychlorinated biphenyls; Appl. Env. Micr., 51, 762-767, 1986), *Pseudomonas, Achromobacter, Artrobacter, Corynebacterium* and *Rhodococcus* (Bosco and Ruggeri, Siti contaminati, 4, 36-48, 2003) and by fungi (Kobayashi et al., Microbial removal of hazardous organic compounds; Env. Sci. Tech. 16, 3, 170-183, 1982), including fungi of the genera *Coriolus, Pleurotus, Poria, Coriolopsis, Hirneola, Trametes* (Beaudette et al., Comparison of gas chromatography and mineralization experiments for measuring loss of selected polychlorinated biphenyl congeners in cultures of white rot fungi; Appl. Env. Micr., Vol. 66, No. 6, 2020-2025, June 1998), which are known in the field as "WR fungi".

Several factors can affect microbial degradation of POPs. One factor which is common to the biodegradation of PCBs and of APHs present in soil and sediments is the fraction of substance that is actually available to the microorganisms that are present in the soil. It is in fact known that biodegradation occurs effectively only with respect to the fraction that is dissolved in water and that the corresponding removal kinetics is a function of the concentration in the aqueous phase (Poeton, Biodegradation of polyaromatic hydrocarbons by marine bacteria: effects of solid phase on kinetics; Water Research Journal, 33, 1999). Due to the generally hydrophobic nature of the substances involved, the fraction of contaminants available to microorganisms is very low, and this is a highly limiting factor of the biodegradation kinetics of conventional methods.

US 5,525,139, wich is considered as the closest priort art with regard to claim 1, discloses a process for cleansing soil contaminated with an organic chemical comprising the steps of: a. composting plant material having a carbon:nitrogen ratio of 10:1 to 30: 1; b. mixing said contaminated soil with a suitable amount of the composted plant material; and c. allowing the mixture to stand for a suitable time at ambient temperature until said contaminated soil is cleansed; in which said composted plant material is made at a site remote from said contaminated soil; said plant material is inoculated with a sample of said contaminated soil plus a sample of soil from an area immediately adjacent to said contaminated soil prior to the start of composting; and iron sulfate, ammonium nitrate and manganese oxide are added to said mixture.

FR 2 781 702 discloses a method for rehabilitating soils, sludges and sediments contaminated with organic, inorganic and metallic micropollutants comprises introducing a pollutant-binding or -degrading hydrolysate of marine algae into the contaminated medium.

### Disclosure of the Invention

The aim of the present invention is to provide a method for decontaminating soils and sediments from the presence of POPs that overcomes the drawbacks of the prior art.

Within this aim, an object of the invention is to provide a microbiological method for decontaminating soils and sediments from the presence of POPs, particularly PCB and APH, which is faster, cheaper and more efficient than the ones currently in use.

Another object is to provide a microbiological method, which allows to increase the fraction of POP available for microbial degradation.

This aim and these and other objects that will become better apparent hereinafter are achieved by an additive for decontaminating a sample of soil from the presence of POP, preferably PCB and APH, which comprises:
A) a first component (also referenced here as enzymatic bioactivator), which comprises:
   A1) a product obtained by fermentation of natural organic substances based on vegetable extracts of soy lecithin and malted barley in an amount between 0.1% and 10% by weight,
   A2) carbohydrates in an amount between 0.3% and 30% by weight,
   A3) amino acids in an amount comprised between 0.1% and 10% by weight,
   A4) oligopeptides in an amount between 0.1% and 10% by weight,
   A5) extracts and derivatives of *Macrocystis integrifolia* seaweed in an amount between 0.5% and 50% by weight,
   A6) agar in an amount between 0.1 % and 10% by weight,
   A7) at least one bacterial strain selected from the group that consists of autotrophic and heterotrophic mesophilic and thermophilic bacteria, in amounts comprised between 10³ and 10¹², concentration expressed as UFC/g (Colony Forming Units/g),
   A8) at least one yeast in an amount between 10² and 10¹¹ UFC/g,
   A9) at least one strain of actinomycetes in an amount between 10³ and 10¹⁰ UFC/g,
   A10) at least one enzyme selected from the group that consists of alpha amylase, beta amylase, protease, lipase, lactase, pancrease, pentosanase, glucoamylase, beta glucanase, cellulase, hemicellulase, pectinase, phosphorylase, pullulanase, peroxidase, polyphenoloxidase, dioxygenase, in an amount between 0.01% and 10% by weight; and
B) a second component (also referenced here as nutrient-synergizing component), which comprises:
   B1) organic carbon comprised between 0.5% and 55% by weight referred to the weight of the second component as such,
   B2) N-K mineral nutrients with a total nitrogen content on WB comprised between 0.1 and 20% by weight referred to the weight of the second component as such, total potassium on WB comprised between 0.1 and 20% by weight referred to the weight of the second component as such,
   B3) phosphorite derived from fine milling of natural phosphate rocks having a total phosphorus content on WB comprised between 0.1 % and 20% by weight referred to the weight of the second component as such,
   B4) mineral biocatalysts based on calcium and magnesium carbonates derived from *Lithothamnium calcareum* algae, comprised between 0.1 % and 10% by weight,
   B5) extracts of *Ascophillum nodosum* seaweed in an amount between 0.5% and 50% by weight,
      in the form of a combined preparation for simultaneous or sequential use in the microbiological degradation of POPs that are present in said sample of soil, in accordance with claim 1.

The aim and objects of the invention are also achieved by a method for decontaminating a sample of soil from the presence of POP, particularly PCB and APH, said method comprising the step of placing said sample of soil in contact with an additive as defined above, and wherein the components of the additive can be added simultaneously, successively or separately.

It is understood that any characteristic that is mentioned with regard to a single aspect of the invention but can be referred also to other aspects, must be considered equally valid with reference to these last aspects even if it is not repeated explicitly.

In a first embodiment, the invention relates to a new additive to be used in decontaminating soil from POP pollution, wherein the additive comprises two components as defined above.

It is advantageous for the first component (A) of the additive to comprise also one or more of the following:
A11) at least one microfungus in an amount between 10³ and 10¹⁰ UFC/g, and
A12) at least one microalga in an amount between 10³ and 10¹² UFC/g.

It is advantageous for the second component (B) of the additive to comprise also:
B6) at least one bacterial strain selected from the group that consists of autotrophic and heterotrophic mesophilic bacteria, in an amount between 10³ and 10¹², concentration expressed as UFC/g.

It is advantageous for the ingredient (B2) to comprise also, in addition to nitrogen and potassium, phosphorus in a total amount comprised between 0.1 and 20% by weight.

It is advantageous for the two components to be used simultaneously. The expression "decontaminate a sample of soil" is used to designate a significant reduction of the concentration of the pollutants that are present in the soil sample.

The acronyms POP, PCB and APH designate the classes of compounds as defined above.

The expression "soil sample" is used to designate both an amount of soil or sediments to be taken at any depth from the soil that surrounds it in order to treat it in isolation, and a surface or non-superficial geographical region or area, to be treated in place by inoculation of the additive.

The two components can be provided initially separated or already combined in a single kit, on condition that in any case the two components are combined. It is understood that the two components must not be combined necessarily with each other before being added to the soil to be decontaminated and that the two components can be added to the soil to be decontaminated in any order with respect to each other.

In another embodiment, the invention relates to a method for eliminating POP contamination, particularly contamination due to PCB and APH, from a soil sample, wherein the method uses the microbiological degradation produced by the highly selected microbial-enzymatic additive described above.

In a preferred step of execution, the method comprises the steps of:
a) providing a sample of soil to be decontaminated,
b) placing said sample in contact with said additive, wherein the components can be added simultaneously or successively, preferably simultaneously, and
c) injecting air into the sample of soil and additive in an amount sufficient to support the biodegradation reaction.

In a preferred embodiment, for 1 cubic meter of soil to be decontaminated, the first component (A) of the additive is present in an amount comprised between 1 g/m³ and 10,000 g/m³ and the second component (B) of the additive is present in an amount comprised between 30 g/m³ and 50,000 g/m³.

The kinetics of the degradation reaction can be monitored easily by taking samples and then performing chemical and/or microbiological analysis. If monitoring reveals a unsatisfactory reaction kinetics or microbial growth curve, the method can comprise a step, which follows step d), of adding a further amount of additive to the soil to be decontaminated, said step being repeatable one or more times.

The time required to reduce the pollutant load in the soil varies depending on the type of soil and on the concentration of the pollutants. This time can be determined easily by a person skilled in the art by means of routine experiments.

The step of placing the soil in contact with the additive can occur according to various embodiments. In a first embodiment, the soil sample is not isolated from the ground and the additive is inoculated by means of "in site" methods, i.e., direct inoculation into the ground with conventional methods, optionally with the aid of pressure pumps, or "on site" methods, i.e., after forming biopiles of polluted soil.

In a different embodiment, the soil sample to be treated is isolated from the surrounding ground and transferred into bioreactors adapted to work in a slurry phase, into which the additive is then added. This solution allows the best control of the degradation parameters and increases the efficiency of the method, since it optimizes the surface of contact between the polluted matrix and the additive. More particularly, in this embodiment the soil to be treated is suspended in a liquid phase until a slurry is generated and is then mixed with oxygen and additive. The reactor can operate in batch mode (SS-SBR reactor, Sediment Slurry-Sequencing Batch Reactor) or in continuous mode (CSTR reactor, Continuous Stirred Tank Reactor).

The method according to the present invention includes among its advantages the increase of the production of biosurfactants on the part of the microorganisms of the additive.

The term "biosurfactants" designates a group of substances with surfactant properties generated naturally by many kinds of microorganism during growth on hydrophobic compounds. The presence of biosurfactants is important, since it entails an increase of the fraction of POP desorption from the solid supporting matrix, which as mentioned is normally low. An increase in the concentration of biosurfactants is matched by a significant improvement in the removal of pollutants from the soil sample to be decontaminated.

The carbon/nitrogen ratio in the environment in which the microorganisms of the additive are grown is among the main factors that control the production of biosurfactants.

It has been found that the maximum production of biosurfactants occurs at a C/N ratio, in the total mass of soil plus additive, comprised between 16:1 and 18:1. If the value of this ratio in the soil differs from the indicated values, it is possible to integrate the carbon and/or nitrogen component with the synergizing nutrient (component B) or also optionally with additional classic nitrogen-containing ingredients of the field.

In a third embodiment, the invention relates to the use of an additive as described above to decontaminate a sample of soil from the presence of POP, particularly PCB and APH.

Further characteristics and advantages of the present invention will become better apparent from the description of the following preferred embodiments, intended exclusively as non-limiting examples.

### Ways of carrying out the invention

### Example 1

The effectiveness of the enzymatic-bacterial additive and of the method that uses it to degrade PCBs was evaluated. The samples to be treated were constituted by soils polluted by these substances. All the analyses related to the concentration of PCB were conducted at the external laboratory Chemiricerche S.r.l. on behalf of the Applicant. The analyses were performed with two PCB extraction methods (extraction with n-hexane and with CHCl₂), both on the sample as it is and on the dry fraction. This procedure allowed to avoid any problems due to difficulties in extracting the PCBs and in terms of results biased by the presence of water in the soil samples. Analyses related to the total bacterial count, yeasts and molds and moisture content were performed in the in-house laboratory of the Applicant.

### I. Pretreatment of the samples

The soil sample representative of the matrix involved in the pollution was screened through a 2-mm sieve. After pretreatment, PCB analyses were conducted, yielding the results shown in Table 1.

| SAMPLE | TOTAL PCB (mg/kg) |
|---|---|
| Dry fraction extracted with n-hexane | 1200 |
| Dry fraction extracted with CHCl₂ | 1700 |
| Wet basis extracted with n-hexane | 100 |
| Wet basis extracted with CHCl₂ | 500 |
| Table 1 | |

At the same time, the total bacterial count and mold and yeast counts were determined, finding a concentration equal to:
- total count: 8x10⁴ UFC/g
- molds and yeasts: 3x10³ UFC/g

### 2. Preparation of sample and inoculum

An enzymatic-bacterial bioactivator (first component of the additive known commercially as Micropan Alfa POBs) constituted as follows was accurately added to approximately 15 kg of polluted soil:
- product derived from fermentation, concentration and selection of natural organic substances based on vegetable extracts 10% by weight,
- carbohydrates 20% by weight,
- amino acids 10% by weight,
- oligopeptides 5% by weight,
- extracts and derivatives of seaweed 10% by weight,
- agar 1% by weight,
   inoculated with the following microbial strains of natural origin (concentrations expressed as UFC/g):
   - autotrophic and heterotrophic mesophilic and thermophilic bacteria 10¹¹,
   - yeasts 10¹⁰
   - actinomycetes 10⁸
   - microfungi 10⁹ and
   - microalgae 10⁸

The product further contains, in the total concentration of 2%, the following enzymes: alpha amylase, beta amylase, protease, lipase, lactase, pentosanase, glucoamylase, beta-glucanase, cellulase, hemicellulase, pectinase, phosphorylase, pullulanase, peroxidase, polyphenol oxidase, dioxygenase.

The nutrient-synergizing product (second component known commercially as Micropan Beta POBs), constituted as follows, was then added:
- natural organic matrix stabilized by controlled fermentation with an organic carbon content of 50% by weight referred to the weight of the product as such,
- N-P-K mineral nutrients of organic origin, with a total nitrogen content equal to 3% by weight referred to the weight of the product as such, total phosphorus 6% by weight referred to the weight of the product as such, total potassium 1% by weight referred to the weight of the product as such;

- phosphorite derived from fine milling of natural phosphatic rocks with a total phosphor of content equal to 6% by weight referred to the weight of the product as such,
- mineral biocatalysts based on calcium and magnesium carbonates derived from *Lithothamnium calcareum* algae equal to 5% by weight,
- extracts and derivatives of seaweeds 10% by weight. Dosages were performed by taking into account the following ratios:
- 0.3% of the enzymatic-bacterial bioactivator,
- 0.6% of nutrient-synergizing ingredient.

The moisture content of the two matrices was brought to approximately 40% by weight, and every week the matrices were subjected to mixing and the parameters of moisture, total count, molds and yeasts and temperatures were monitored.

### 3. Analytical results

Table 2 lists the analytical results on the concentration of PCB at the beginning of the test and 60 days after treatment.

**Table 2**

| | DRY | | WET BASIS | |
|---|---|---|---|---|
| PERIOD | Extracted with n-hexane | Extracted with CHCl₂ | Extracted with n-hexane | Extracted with CHCl₂ |
| Beginning of test | 1,200 mg/kg | 1,700 mg/kg | 100 mg/kg | 500 mg/kg |
| After 60 days | 21 mg/kg | 48 mg/kg | 0.7 mg/kg | 31 mg/kg |
| Removal | <98.25% | 97.18% | 99.30% | 93.80% |

### 4. Conclusions

As can be noticed easily from Table 2, degradation occurs very evidently. Even if the analysis method is changed or the dry sample or sample as it is is tested, the analytical trend is an evident reduction of pollutants (PCB).

## Claims

1. An additive for decontaminating a sample of soil from the presence of Persistent Organic Pollutants, comprising:
A) a first component, which comprises:
A1) a product obtained by fermentation of natural organic substances based on vegetable extracts of soy lecithin and malted barley in an amount between 0.1% and 10% by weight,
A2) carbohydrates in an amount between 0.3% and 30% by weight,
A3) amino acids in an amount comprised between 0.1% and 10% by weight,
A4) oligopeptides in an amount between 0.1% and 10% by weight,
A5) extracts and derivatives of *Macrocystis integrifolia* seaweed in an amount between 0.5% and 50% by weight,
A6) agar in an amount between 0.1 % and 10% by weight,
A7) at least one bacterial strain selected from the group that consists of autotrophic and heterotrophic mesophilic and thermophilic bacteria, in amounts comprised between 10³ and 10¹², concentration expressed as Colony Forming Units/g,
A8) at least one yeast in an amount between 10² and 10¹¹ Colony Forming Units/g,
A9) at least one strain of actinomycetes in an amount between 10³ and 10¹⁰ Colony Forming Units/g,
A10) at least one enzyme selected from the group that consists of alpha amylase, beta amylase, protease, lipase, lactase, pancrease, pentosanase, glucoamylase, beta glucanase, cellulase, hemicellulase, pectinase, phosphorylase, pullulanase, peroxidase, polyphenoloxidase; dioxygenase, in an amount between 0.01 % and 10% by weight; and
B) a second component, comprising:
B1) organic carbon comprised between 0.5% and 55% by weight referred to the weight of the second component as such,
B2) nitrogen-potassium mineral nutrients with a total nitrogen content comprised between 0.1 and 20% by weight referred to the weight of the second component as such, total potassium comprised between 0.1 and 20% by weight referred to the weight of the second component as such,
B3) phosphorite derived from fine milling of natural phosphate rocks having a total phosphorus content comprised between 0.1% and 20% by weight referred to the weight of the second component as such,
B4) mineral biocatalysts based on calcium and magnesium carbonates derived from *Lithothamnium calcareum* algae, comprised between 0.1% and 10% by weight,
B5) extracts of *Ascophillum nodosum* seaweed in an amount comprised between 0.5% and 50% by weight,
in the form of a combined preparation for simultaneous or sequential use in the microbiological degradation of Persistant Organic Pollutants present in said sample of soil.

2. The additive according to claim 1, wherein the first component A) comprises even one or more of the following:
A11) at least one microfungus in an amount between 10³ and 10¹⁰ Colony Forming Units/g and
A12) at least one microalga in an amount between 10³ and 10¹² Colony Forming Units/g.

3. The additive according to claims 1 or 2, wherein the second component B) also comprises:
B6) at least one bacterial strain selected from the group that consists of autotrophic and heterotrophic mesophilic bacteria, in an amount between 10³ and 10¹², concentration expressed as Colony Forming Units/g.

4. The additive according to one or more of the preceding claims, wherein the ingredient B2) further comprises phosphor in a total amount comprised between 0.1 and 20% by weight referred to the weight of the second component as such.

5. The additive according to one or more of the preceding claims, wherein the two components are used simultaneously.

6. The additive according to one or more of the preceding claims, wherein the Persistent Organic Pollutants are Polychlorinated Biphenyls and Polycyclic Aromatic Hydrocarbons.

7. A method for decontaminating a sample of soil from the presence of Persistent Organic Pollutants, particularly Polychlorinated Biphenyls and Polycyclic Aromatic Hydrocarbons, said method comprising the step of placing said soil sample in contact with an additive according to one or more of claims 1 to 6, wherein the two components of said additive can be added simultaneously or successively.

8. The method according to claim 7, comprising the steps of:
a) providing a sample of soil to be decontaminated,
b) placing said sample in contact with an additive according to one or more of claims 1 to 6, wherein the components can be added simultaneously or successively, preferably simultaneously, and
c) injecting air into the soil sample and additive in an amount sufficient to support the biodegradation reaction.

9. The method according to claim 7 or 8, wherein for 1 cubic meter of soil to be decontaminated, the first component A) of the additive is present in an amount comprised between 1 g/m³ and 10,000 g/m³ and the second component B) of the additive is present in an amount comprised between 30 g/m³ and 50,000 g/m³.

10. The method according to claim 8, comprising a step which follows step d) and consists in adding a further amount of additive to the soil to be decontaminated, said successive step being repeatable one or more times.

11. The method according to one or more of claims 7 to 10, wherein the step of placing the sample of soil in contact with the additive is performed according to a method selected among:
i) direct in-site inoculation of the additive into the sample of soil not isolated from the surrounding ground,
ii) on-site inoculation of the additive into the sample of soil after forming beforehand biopiles with the soil sample, and
iii) placing additive and soil in contact within bioreactors adapted to work in a slurry phase.

12. The method according to one or more of claims 7 to 11, wherein the C/N ratio in the total mass of soil plus additive is comprised between 16:1 and 18:1.

13. The use of an additive according to one or more of claims 1 to 6 to decontaminate a sample of soil from the presence of Persistent Organic Pollutants, particularly Polychlorinated Biphenyls and Polycyclic Aromatic Hydrocarbons.

## Patentansprüche

1. Additiv zur Dekontaminierung einer Bodenprobe von der Anwesenheit persistenter organischer Verunreinigungen (POP), enthaltend:
A) eine erste Komponente, die aufweist:
A1) ein durch Fermentation natürlicher organischer Substanzen auf Basis von Gemüseextrakten von Sojalecithin und Gerstenmalz erhaltenes Produkt in einem Anteil zwischen 0,1 und 10 Gew.-%,
A2) Kohlenhydrate in einem Anteil zwischen 0,3 und 30 Gew.-%,
A3) Aminosäuren in einem Anteil zwischen 0,1 und 10 Gew.-%
A4) Oligopeptide in einem Anteil zwischen 0,1 und 10 Gew.-%,
A5) Extrakte und Derivate von *Macrocystis integrifolia* Meeresalgen in einem Anteil zwischen 0,5 und 50 Gew.-%,
A6) Agar in einem Anteil zwischen 0,1 und 10 Gew.-%,
A7) wenigstens ein Bakterienstamm ausgewählt aus der Gruppe bestehend aus autotrophen und heterotrophen mesophilen und thermophilen Bakterien in einer Menge zwischen 10³ und 10¹², wobei die Konzentration ausgedrückt ist in CFU (Colony Forming Units =Kolonie-bildende-Einheiten)/g,
A8) wenigstens eine Hefe mit einem Gehalt zwischen 10² und 10¹¹ CFU/g,
A9) wenigstens ein Actinomycetenstamm in einer Menge von zwischen 10³ und 10¹⁰ CFU/g,
A10) wenigstens ein Enzym ausgewählt aus der Gruppe bestehend aus alpha-Amylase, beta-Amylase, Protease, Lipase, Lactase, Pankrease, Pentosanase, Glucoamylase, beta-Glucanase, Cellulase, Hemicellulase, Pektinase, Phosphorylase, Pullulanase, Peroxidase, Polyphenoloxidase, Dioxygenase, in einer Menge zwischen 0,01 und 10 Gew.-%; und
B) eine zweite Komponente, enthaltend:
B1) organischer Kohlenstoff, enthalten in einem Gewichtsanteil zwischen 0,5 und 55 Gew.-% bezogen auf das Gewicht der zweiten Komponente insgesamt,
B2) Stickstoff Kalium-Mineralnährstoffe mit einem Gesamtstickstoffgehalt zwischen 0,1 und 20 Gew.-%, bezogen auf das Gewicht der zweiten Komponente als solcher, und einem Kalium-Gesamtgehalt zwischen 0,1 und 20 Gew.-%, bezogen auf das Gewicht der zweiten Komponente als solcher,
B3) Phosphorit, erhalten oder abgeleitet durch feines Mahlen naürlicher Phosphat-Steine mit einem Gesamtphosphorgehalt zwischen 0,1 und 20 Gew.-%, bezogen auf das Gewicht der zweiten Komponente als solcher,
B4) mineralische Biokatalysatoren auf Basis von Kalzium- und Magnesiumcarbonaten, erhalten oder abgeleitet aus *Lithothamnium calcareum*-Algen, enthalten mit zwischen 0,1 und 10 Gew.-%,
B5) Extrakte von *Ascophillum* nodosum-Meeresalgen in einer Menge zwischen 0,5 und 50 Gew.%,
in Form eines Kombinationspräparates zur simultanen oder sequentiellen Anwendung für den mikrobiologischen Abbau persistenter organischer Verunreinigungen, die in der betreffenden Bodenprobe anwesend sind.

2. Additiv nach Anspruch 1, wobei die erste Komponente A) noch ein oder mehrere des nachfolgend Aufgezählten aufweist:
A11) wenigstens einen Mikrofungus in einer Menge zwischen 10³ und 10¹⁰ CFU/g und
A12) wenigstens eine Mikroalge in einer Menge zwischen 10³ und 10¹² CFU/g.

3. Additiv nach Anspruch 1 oder 2, wobei die zweite Komponente B) weiterhin enthält:
B6) wenigstens einen Bakterienstamm ausgewählt aus der Gruppe bestehend aus autotrophen und heterotrophen mesophilen Bakterien in einer Menge zwischen 10³ und 10¹², wobei die Konzentration ausgedrückt ist als Kolonie-bildende-Einheiten (Colony forming Units = CFU)/g.

4. Additiv nach einem oder mehreren der vorstehenden Ansprüche, worin der Inhaltsstoff B2) außerdem Phosphor enthält, in einer Gesamtmenge zwischen 0,1 und 20 Gew.-%, bezogen auf das Gewicht der zweiten Komponente insgesamt.

5. Additiv nach einem oder mehreren der vorstehenden Ansprüche, wobei die zwei Komponenten gleichzeitig angewendet werden.

6. Additiv nach einem oder mehreren der vorstehenden Ansprüche, wobei die persistenten organischen Verunreinigungen (POP) polychlorierte Biphenyle und polycyklische aromatische Kohlenwasserstoffe sind.

7. Verfahren zur Dekontaminierung einer Bodenprobe von der Anwesenheit persistenter organischer Verunreinigungen, insbesondere polychlorierter Biphenyle und polycyklischer aromatischer Kohlenwasserstoffe, wobei das Verfahren den Schritt umfasst, dass die Bodenprobe in Kontakt mit einem Additiv nach einem oder mehreren der Ansprüche 1 bis 6 gebracht wird, wobei die beiden Komponenten des Additivs gleichzeitig oder sukzessive zugefügt werden können.

8. Verfahren nach Anspruch 7, welches die Schritte aufweist:
a) Bereitstellen der Bodenprobe, die dekontaminiert werden soll,
b) in Kontaktbringen der Probe mit einem Additiv nach einem oder mehreren der Ansprüche 1 bis 6, wobei die Komponenten gleichzeitig oder sukzessive zugegeben werden können, vorzugsweise gleichzeitig, und
c) Injizieren von Luft in die Bodenprobe und das Additiv in einer Menge, die ausreicht, um die Biodegradationsreaktion zu unterstützen.

9. Verfahren nach Anspruch 7 oder 8, wobei für einen Kubikmeter zu dekontaminierenden. Boden die erste Komponente A) des Additivs in einer Menge zwischen 1 g/m³ und 10000 g/m³ anwesend ist und die zweite Komponente B) des Additivs in einer Menge zwischen 30g/m³ und 50000 *g*/*m³* anwesend ist.

10. Verfahren nach Anspruch 8, umfassend einen Schritt, der Schritt d) folgt und darin besteht, eine weitere Menge des Additivs zu dem zu dekontaininierenden Boden hinzuzufügen, wobei dieser nachfolgende Schritt ein oder mehrere Male wiederholbar ist.

11. Verfahren nach einem oder mehreren der Ansprüche 7 bis 10, wobei der Schritt des in Kontaktbringens der Bodenprobe mit dem Additiv durchgeführt wird gemäß einem Verfahren ausgewählt aus:
i) direktes Inokulieren des Additivs vor Ort in die Bodenprobe, die nicht von dem umgebenden Boden isoliert ist,
ii) Inokulieren des Additivs vor Ort in die Bodenprobe, nachdem zuvor Bio-Erdmieten der Bodenprobe gebildet wurden und
iii) in Kontaktbringen von Additiv und Boden innerhalb eines Bioreaktors, der für das Arbeiten in der Nassschlammphase ausgelegt ist.

12. Verfahren nach einem oder mehreren der Ansprüche 7 bis 11, wobei das C/N-Verhältnis in der Gesamtbodenmasse einschließlich Additiv zwischen 16:1 und 18:1 liegt,

13. Verwendung eines Additivs nach einem oder mehreren der Ansprüche 1 bis 6 für die Dekontaminierung einer Bodenprobe von der Anwesenheit persistenter organischer Verutlreinigungen (POPs), insbesondere polychlorierter Biphenyle und polycyklischer aromatischer Kohlenwasserstoffe.

## Revendications

1. Additif pour décontaminer un échantillon de sol de la présence de polluants organiques persistants, comprenant :
A) un premier constituant, qui comprend :
A1) un produit obtenu par fermentation de substances organiques naturelles à base d'extraits végétaux de lécithine de soja et d'orge maltée en une quantité entre 0,1 % et 10 % en poids,
A2) des glucides en une quantité entre 0,3 % et 30 % en poids,
A3) des acides aminés en une quantité comprise entre 0,1 % et 10 % en poids,
A4) des oligopeptides en une quantité entre 0,1 % et 10 % en poids,
A5) des extraits et des dérivés de l'algue marine *Macrocystis integrifolia* en une quantité entre 0,5 % et 50 % en poids,
A6) de la gélose en une quantité entre 0,1 % et 10 % en poids,
A7) au moins une souche bactérienne choisie dans le groupe constitué par les bactéries mésophiles et thermophiles autotrophes et hétérotrophes, en des quantités comprises entre 10³ et 10¹², concentration exprimée en unités formant colonie/g,
A8) au moins une levure en une quantité entre 10² et 10¹¹ unités formant colonie/g,
A9) au moins une souche d'actinomycètes en une quantité entre 10³ et 10¹⁰ unités formant colonie/g,
A10) au moins une enzyme choisie dans le groupe constitué par une alpha amylase, une bêta amylase, une protase, une lipase, une lactase, une pancréase, une pentosanase, une glucoamylase, une bêta glucanase, une cellulase, une hémicellulase, une pectinase, une phosphorylase, une pullulanase, une peroxydase, une polyphénoloxydase, une dioxygénase, en une quantité entre 0,01 % et 10 % en poids ; et
B) un second constituant, comprenant :
B1) un carbone organique compris entre 0,5 % et 55 % en poids par rapport au poids du second constituant en tant que tel,
B2) des substances nutritives minérales azote-potassium ayant une teneur totale en azote comprise entre 0,1 et 20 % en poids par rapport au poids du second constituant tel quel, le potassium total étant compris entre 0,1 et 20 % en poids par rapport au poids du second constituant en tant que tel,
B3) une phosphorite dérivée du broyage fin de roches phosphatées naturelles ayant une teneur totale en phosphore comprise entre 0,1 % et 20 % en poids par rapport au poids du second constituant en tant que tel,
B4) des biocatalyseurs minéraux à base de carbonates de calcium et de magnésium dérivés d'algues *Lithothamnium calcareum,* compris entre 0,1 % et 10 % en poids,
B5) des extraits d'algue marine *Ascophillum nodosum* en une quantité comprise entre 0,5 % et 50 % en poids,
sous la forme d'une préparation combinée pour l'utilisation simultanée ou séquentielle dans la dégradation microbiologique de polluants organiques persistants présents dans ledit échantillon de sol.

2. Additif selon la revendication 1, dans lequel le premier constituant A) comprend même un ou plusieurs parmi les suivants :
A11) au moins un microchampignon en une quantité entre 10³ et 10¹⁰ unités formant colonie/g et
A12) au moins une microalgue en une quantité entre 10³ et 10¹² unités formant colonie/g.

3. Additif selon les revendications 1 ou 2, dans lequel le second constituant B) comprend aussi ;
B6) au moins une souche bactérienne choisie dans le groupe constitué par les bactéries mésophiles autotrophes et hétérotrophes, en une quantité entre 10³ et 10¹², concentration exprimée en unités formant colonie/g.

4. Additif selon une ou plusieurs des revendications précédentes, dans lequel l'ingrédient B2) comprend en outre du phosphore en une quantité totale comprise entre 0,1 et 20 % en poids par rapport au poids du second constituant en tant que tel.

5. Additif selon une ou plusieurs des revendications précédentes, dans lequel les deux constituants sont utilisés simultanément.

6. Additif selon une ou plusieurs des revendications précédentes, dans lequel les polluants organiques persistants sont des biphényles polychlorés et des hydrocarbures aromatiques polycycliques.

7. Procédé pour décontaminer un échantillon de sol de la présence de polluants organiques persistants, en particulier les biphényles polychlorés et les hydrocarbures aromatiques polycycliques, ledit procédé comprenant l'étape consistant à mettre ledit échantillon de sol en contact avec un additif selon une ou plusieurs des revendications 1 à 6, dans lequel les deux constituants dudit additif peuvent être ajoutés simultanément ou successivement.

8. Procédé selon la revendication 7, comprenant les étapes consistant :
a) à fournir un échantillon de sol à décontaminer,
b) à mettre ledit échantillon en contact avec un additif selon une ou plusieurs des revendications 1 à 6, où les constituants peuvent être ajoutés simultanément ou successivement, de préférence simultanément, et
c) à injecter de l'air dans l'échantillon de sol et l'additif en une quantité suffisante pour supporter la réaction de biodégradation.

9. procédé selon la revendication 7 ou 8, dans lequel, pour 1 mètre cube de sol à décontaminer, le premier constituant A) de l'additif est présent en une quantité comprise entre 1 g/m³ et 10 000 g/m³ et le second constituant B) de l'additif est présent en une quantité comprise entre 30 g/m³ et 50 000 g/m³.

10. Procédé selon la revendication 8, comprenant une étape qui suit l'étape d) et consiste à ajouter une quantité supplémentaire d'additif au sol à décontaminer, ladite étape successive étant répétable une ou plusieurs fois.

11. Procédé selon une ou plusieurs des revendications 7 à 10, dans lequel l'étape consistant à mettre l'échantillon de sol en contact avec l'additif est effectuée d'après un procédé choisi parmi :
i) l'inoculation directement au site de l'additif dans l'échantillon de sol non isolé de la terre environnante,
ii) l'inoculation sur site de l'additif dans l'échantillon de sol après formation de biopiles préalables avec l'échantillon de sol, et
iii) la mise en contact de l'additif et du sol à l'intérieur de bioréacteurs adaptés pour fonctionner en phase de suspension.

12. Procédé selon une ou plusieurs des revendications 7 à 11, dans lequel le rapport C/N dans la masse totale de sol plus additif est compris entre 16:1 et 18:1.

13. Utilisation d'un additif selon une ou plusieurs des revendications 1 à 6 pour décontaminer un échantillon de sol de la présence de polluants organiques persistants, en particulier les biphényles polychlorés et les hydrocarbures aromatiques polycycliques.
